# EUROPÄISCHE PATENTANMELDUNG

(11) **EP 3 051 369 A1**
(43) Veröffentlichungstag der Anmeldung: **03.08.2016**
(21) Anmeldenummer: 15152694.4
(22) Anmeldetag: 27.01.2015
(51) Int. Cl.: G05B 19/042, G05B 19/05

(54) **Verfahren zum Zugriff auf ein Automatisierungssystem mit einem Webserver mittels eines Webclients eines Geräts**

(71) Anmelder: Siemens Aktiengesellschaft, 80333 München (DE)
(72) Erfinder: Lutz, Benjamin, 76327 Pfinztal (DE)

(57) **Zusammenfassung**

Angegeben werden ein Verfahren und ein entsprechendes Gerät (12), wobei sich das Verfahren dadurch auszeichnet, dass mittels eines einfachen Web-Client-Geräts (20) ein Zugriff auf ein Automatisierungssystem (10) und ein davon umfasstes Gerät (12) mit einem Web Server sowie ein durch das Automatisierungssystem (10) selbst bereit gestelltes Engineeringsystem (42-54) möglich ist und auf diese Weise eine Projektierung des Automatisierungssystems (10) erfolgen kann, ohne wie bisher ein auf dem Client (20) installiertes Engineeringsystem (42-54) oder ein auf einer separaten Engineering-Station (22) installiertes Engineeringsystem (42-54) zu benötigen.

## Beschreibung

Die Erfindung betrifft ein Verfahren zum Zugriff auf zumindest ein Automatisierungsgerät eines zur Steuerung und/oder Überwachung eines technischen Prozesses bestimmten Automatisierungssystems. Der Zugriff erfolgt mittels eines kommunikativ mit dem Automatisierungssystem verbundenen entfernten Geräts, zum Beispiel einem Gerät in Form eines Standard-Computers. Speziell bezieht sich das Verfahren auf einen Zugriff auf das Automatisierungssystem zur Projektierung einer jeweiligen Automatisierungslösung. Eine solche Projektierung umfasst eine Programmierung der jeweiligen Automatisierungslösung und/oder eine Konfiguration des Automatisierungssystems.

Der Begriff Automatisierungssystem bezeichnet die Gesamtheit der zur Umsetzung der jeweiligen Automatisierungsaufgabe eingesetzten oder bestimmten Automatisierungsgeräte und die Art und die Anzahl der jeweils zum Einsatz kommenden Automatisierungsgeräte ist Teil der Automatisierungslösung. Der Zugriff auf das Automatisierungssystem ist letztlich stets ein Zugriff auf zumindest ein von dem Automatisierungssystem umfasstes Automatisierungsgerät. Im Interesse einer besseren Lesbarkeit der nachfolgenden Beschreibung wird ein Zugriff auf ein Automatisierungsgerät des Automatisierungssystems oder auf zumindest ein Automatisierungsgerät des Automatisierungssystems zusammenfassend als Zugriff auf das Automatisierungssystem ausgedrückt.

Das Gerät, mit dem der Zugriff erfolgt, zum Beispiel ein Gerät in Form von oder nach Art eines Standard-Computers, insbesondere auch ein sogenanntes SmartPhone oder ein Tablet-Computer, wird im Folgenden allgemein als Client-Gerät oder kurz als Client bezeichnet. Bei dem Client handelt es sich um ein entferntes Gerät, wobei sich "entfernt" entsprechend der üblichen Terminologie nicht auf eine konkrete Distanz zwischen Automatisierungssystem und Client bezieht, sondern vielmehr zum Ausdruck bringt, dass die kommunikative Verbindung zwischen Client und Automatisierungssystem mittels zumindest eines Telekommunikationsnetzwerks besteht und über dieses eine Datenübertragung vom und zum Client oder Automatisierungssystem erfolgt.

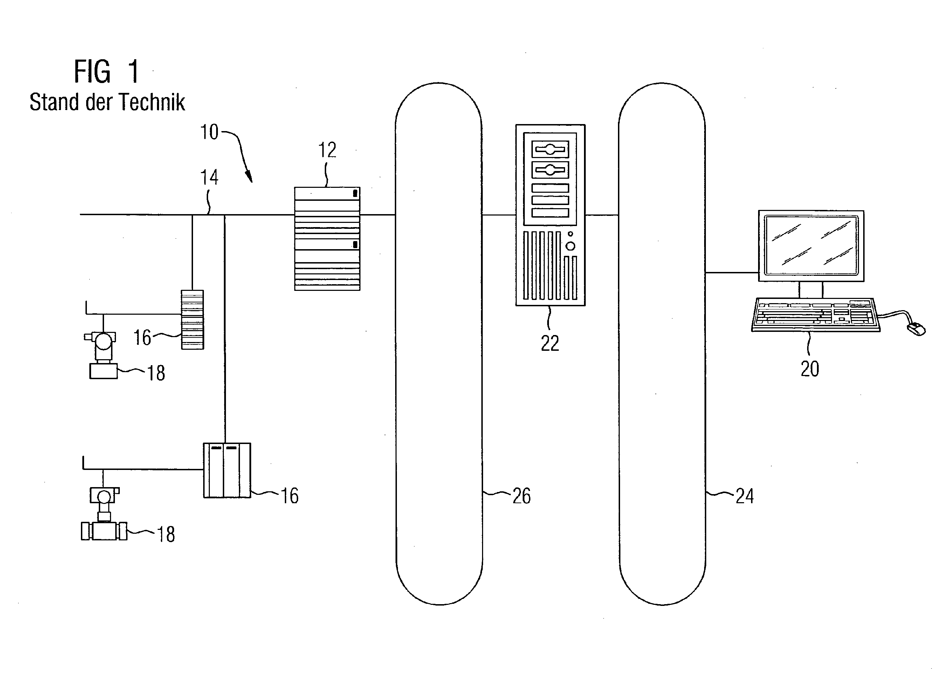

Aktuell werden zur Projektierung von Anlagen dedizierte Server eingesetzt, die jeweils als Engineering-Station fungieren und auf denen dazu die jeweilige Engineering-Software installiert werden muss. Zur Projektierung von Automatisierungslösungen müssen somit solche Server angeschafft, installiert, in ein jeweiliges Telekommunikationsnetzwerk integriert sowie gewartet und gepflegt werden. Die weiter unten mit zusätzlichen Details erläuterte Darstellung in FIG 1 zeigt ein typisches Szenario, bei dem ein Zugriff auf ein jeweiliges Automatisierungssystem mittels eines Servers und eines wiederum darauf zugreifenden Clients erfolgt.

Wenn ein solcher Server, also die Engineering-Station, ausfällt, führt dies normalerweise zumindest zu Verzögerungen bei der Projektierung der jeweiligen Anlage und ist mit entsprechenden Kosten aufgrund des Ausfalls und des Zeitverlusts verbunden. Ein Ausfall einer Engineering-Station kann sogar Auswirkungen auf den Betrieb einer jeweiligen Anlage haben, wenn die Engineering-Station auch für die Diagnose des Automatisierungssystems genutzt wird.

Ausgehend davon besteht eine Aufgabe der vorliegenden Erfindung darin, eine Möglichkeit zum Zugriff auf ein Automatisierungssystem zur Projektierung einer jeweiligen Automatisierungslösung anzugeben, die im Vergleich zur aktuellen Situation einen geringeren Hardwareaufwand und/oder einen geringeren Pflegeaufwand erfordert.

Diese Aufgabe wird mittels eines Verfahrens mit den Merkmalen des Anspruchs 1 sowie mit zur Ausführung des Verfahrens bestimmten und eingerichteten Geräten gelöst. Bei dem Verfahren ist dazu zum Zugriff auf ein zur Steuerung und/oder Überwachung eines technischen Prozesses bestimmtes Automatisierungssystem mittels eines kommunikativ mit dem Automatisierungssystem verbundenen Geräts (Client) Folgendes vorgesehen: In einen Speicher eines Automatisierungsgeräts oder zumindest eines von dem Automatisierungssystem umfassten Automatisierungsgeräts ist ein als Webserver fungierendes Computerprogramm geladen. In einen Speicher des entfernten Geräts ist ein als Webclient fungierendes Computerprogramm, zum Beispiel ein Webbrowser, geladen. Die kommunikative Verbindung zwischen dem entfernten Gerät und dem Automatisierungsgerät besteht dabei in Form einer kommunikativen Verbindung zwischen dem Webclient und dem Webserver. Die Besonderheit besteht darin, dass in den Speicher des Automatisierungsgeräts ein zur Programmierung und/oder Konfiguration des Automatisierungssystems bestimmtes und als Engineeringsystem fungierendes Computerprogramm geladen ist sowie dass der Webserver als Schnittstelle zu dem Engineeringsystem fungiert und einen Zugriff auf das Engineeringsystem mittels des Webclients erlaubt.

Der Vorteil der Erfindung besteht darin, dass eines der Automatisierungsgeräte des Automatisierungssystems oder mehrere solche Automatisierungsgeräte jeweils als Engineering-Station fungieren, so dass eine bisher notwendige separate Engineering-Station nicht mehr erforderlich ist. Mit dem Entfall einer solchen bisher benötigten Engineering-Station entfallen auch die Kosten für eine entsprechende Hardware. Darüber hinaus muss, nachdem jetzt jeweils zumindest ein Automatisierungsgerät eines Automatisierungssystems als Engineering-Station fungiert und dieses damit gewissermaßen eine passende Entwicklungsumgebung selbst mitbringt, nicht mehr gesondert dafür Sorge getragen werden, dass eine jeweils benötigte Entwicklungsumgebung zur Verfügung steht. Insgesamt entfallen damit bisher notwendige Aufwendungen für eine Anschaffung und Wartung von Hardware sowie notwendige Aufwendungen für eine Installation und Pflege von Software in Form jeweils zumindest einer Entwicklungsumgebung.

Die Funktion der bisher eigenständigen Engineering-Station ist jetzt in ein Automatisierungsgerät des Automatisierungssystems integriert, so dass dieses in Bezug auf das entfernte Gerät als Server fungiert. Die Kommunikation zwischen dem entfernten Gerät (Client) und dem Server, also speziell zwischen dem Client und der in den Speicher des Automatisierungsgeräts geladenen Entwicklungsumgebung, erfolgt über zumindest ein Telekommunikationsnetz und mittels grundsätzlich an sich bekannter Webtechnologien.

Von der Anmelderin der gegenständlichen Anmeldung ist bereits ein Verfahren zum Zugriff auf ein Automatisierungssystem mittels Webtechnologien bekannt, bei dem mittels eines Programmiergeräts und einer in dessen Speicher geladenen Entwicklungsumgebung eine Webseite für einen auf einem Automatisierungsgerät ablaufenden Webserver erstellt wird. Die Webseite wird mittels des Programmiergeräts in den Speicher des Automatisierungsgeräts geladen. Mittels eines Client-Geräts kann auf den Webserver zugegriffen werden, so dass mittels eines clientseitigen Browsers eine Darstellung der Webseite erfolgt. Mittels des Browsers, des Webservers und der Webseite ist dabei ein Zugriff auf Daten des Automatisierungssystems und auch eine Beeinflussung von Zuständen eines mittels des Automatisierungssystems gesteuerten technischen Prozesses möglich. Bei dieser Lösung ist aber eine separate Entwicklungsumgebung noch erforderlich und diese ist zum Beispiel in den Speicher des Programmiergeräts geladen. Mittels des Programmiergeräts und der Entwicklungsumgebung können eine oder mehrere jeweils individuell erstellte Webseiten in den Speicher des Automatisierungsgeräts geladen und von dort mittels des Browsers des Clients abgerufen werden. Der konkrete Zugriff auf das Automatisierungssystem ist dabei aber stets darauf beschränkt, was bei der Erstellung der oder jeder Webseite dort vorgesehen wurde.

Ein weiterer Vorteil der erfindungsgemäßen Lösung besteht damit auch darin, dass aufgrund der Verfügbarkeit der Entwicklungsumgebung bei einem entfernten Zugriff auf zumindest ein Automatisierungsgerät des Automatisierungssystems ein vollständiger Zugriff auf das Automatisierungssystem möglich ist, und zwar genau so, als ob ein Programmiergerät mit einer passenden Entwicklungsumgebung direkt an das jeweilige Automatisierungsgerät angeschlossen wäre oder als ob - wie oben beschrieben - mittels eines Clients der Zugriff auf das Automatisierungssystem über einen dedizierten und als Engineering-Station fungierenden Server erfolgt. Die Entwicklungsumgebung und deren vollständige Funktionalität wird dabei dem jeweiligen Client (oder auch einer Mehrzahl von Clients) "installationsfrei" zur Verfügung gestellt, denn die Entwicklungsumgebung ist auf Seiten des als Server fungierenden Automatisierungsgeräts installiert und auf Seiten des Clients ist abgesehen von einem notwendigen Webbrowser keine weitere Installation erforderlich.

Schließlich besteht ein Vorteil der erfindungsgemäßen Lösung auch darin, dass hinsichtlich Speicherkapazität und Rechenleistung nur vergleichsweise geringe Anforderungen an das jeweilige Client-Gerät gestellt werden, denn die Entwicklungsumgebung befindet sich im Speicher des jeweiligen Automatisierungsgeräts und wird durch dieses ausgeführt. Der Client greift mittels zumindest eines Telekommunikationsnetzes und mittels Webtechnologien auf den Server zu und fungiert selbst im Wesentlichen wie ein sogenanntes "dummes Terminal" und übernimmt lediglich die Ein- und Ausgabefunktionen. Aus diesem Grunde kommen zum Beispiel auch ein Smartphone oder ein Tablet-Computer, aber selbstverständlich auch ein Standard-Computer als Client in Betracht.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin.

Die oben genannte Aufgabe wird auch mit einem Automatisierungsgerät gelöst, in dessen Speicher ein als Webserver fungierendes Computerprogramm sowie ein als Entwicklungsumgebung fungierendes Computerprogramm oder ein Computerprogramm, das beide Funktionalitäten vereint, geladen ist und zur Verwendung in einem Verfahren wie hier und im Folgenden beschrieben bestimmt und eingerichtet ist. Die Erfindung ist dabei bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: ein bekanntes Verfahren zum Zugriff auf ein Automatisierungssystem mittels eines entfernten Client-Geräts und unter Verwendung zumindest eines Telekommunikationsnetzwerks,
- FIG 2: ein weiteres bekanntes Verfahren zum Zugriff auf ein Automatisierungssystem,
- FIG 3: ein Automatisierungsgerät mit Mitteln, nämlich einzelnen Computerprogrammen oder Softwarefunktionen, die das Automatisierungsgerät zu einer Engineering-Station ertüchtigen,
- FIG 4: eine Anmeldung eines Clients bei einem Automatisierungsgerät gemäß FIG 3 und
- FIG 5: den Download einer mittels des Clients und des als Engineering-Station fungierenden Automatisierungsgerät gemäß FIG 3 in das jeweilige Automatisierungssystem.

Die Darstellung in FIG 1 zeigt ein Automatisierungssystem 10 zur Steuerung und/oder Überwachung eines nicht näher darstellten technischen Prozesses. Das Automatisierungssystem 10 umfasst zumindest ein Automatisierungsgerät 12 und bei der dargestellten Ausführungsform ein zentrales Automatisierungsgerät 12, zum Beispiel ein Automatisierungsgerät 12 in Form einer speicherprogrammierbaren Steuerung, und damit mittels eines Feldbus 14 oder dergleichen kommunikativ verbundene weitere Automatisierungsgeräte, zum Beispiel Automatisierungsgeräte in Form sogenannter dezentraler Feldgeräte 16. Stellvertretend für einen jeweiligen technischen Prozess sind mittels des Automatisierungssystems 10 ansteuerbare Aktoren 18 gezeigt.

Im Folgenden gilt - wie eingangs bereits definiert -, dass der Begriff Automatisierungssystem 10 die Gesamtheit der zur Umsetzung der jeweiligen Automatisierungsaufgabe eingesetzten oder bestimmten Automatisierungsgeräte 12, 16 bezeichnet. Der Zugriff auf das Automatisierungssystem 10 ist stets ein Zugriff auf zumindest ein von dem Automatisierungssystem 10 umfasstes Automatisierungsgerät 12, 16, zum Beispiel ein Zugriff auf das zentrale Automatisierungsgerät 12. Im Interesse einer besseren Lesbarkeit der nachfolgenden Beschreibung wird jeder Zugriff auf ein Automatisierungsgerät 12, 16 des Automatisierungssystems 10 oder auf zumindest ein Automatisierungsgerät 12, 16 des Automatisierungssystems 10, insbesondere ein Zugriff zur Programmierung und/oder Konfiguration, zusammenfassend als Zugriff auf das Automatisierungssystem 10 ausgedrückt.

Bisher erfolgt ein Zugriff auf das Automatisierungssystem 10 mittels eines als Engineering-Client fungierenden Geräts 20. In einen Speicher des Geräts 20 ist dafür ein als Client-Software fungierendes Computerprogramm geladen und in der üblichen Fachterminologie wird häufig nicht zwischen der Client-Software und dem ausführenden Gerät 20 unterschieden, so dass auch hier im Folgenden die Engineering-Client-Software oder kurz die Client-Software und das Gerät 20 zusammen als Client 20 bezeichnet werden.

Der Zugriff auf das Automatisierungssystem 10 durch den Client 20 erfolgt mittels einer Engineering-Station 22 und eines Engineering-Systems, wobei auch hier - entsprechend dem mittlerweile üblichen Sprachgebrauch - der Begriff Engineering-Station 22 sowohl die in Form von zumindest einem Computerprogramm vorliegende Engineering-Software wie auch das Gerät, in dessen Speicher diese geladen ist, bezeichnet. In Bezug auf den Client 20 fungiert die Engineering-Station 22 für den Zugriff auf das Automatisierungssystem 10 als Server, so dass die Engineering-Station 22 mitunter auch kurz als Server 22 bezeichnet wird.

Der Client 20 - oder auch eine Mehrzahl von Clients 20 - ist mit der Engineering-Station 22 / dem Server 22 bei der dargestellten Ausführungsform über ein Telekommunikationsnetzwerk 24, zum Beispiel einen Industrial-Ethernet Bus, verbunden. Ebenso ist die Engineering-Station 22 mit dem Automatisierungssystem 10 bei der dargestellten Ausführungsform über ein weiteres Telekommunikationsnetzwerk 26, zum Beispiel ebenfalls einen Industrial-Ethernet Bus, verbunden.

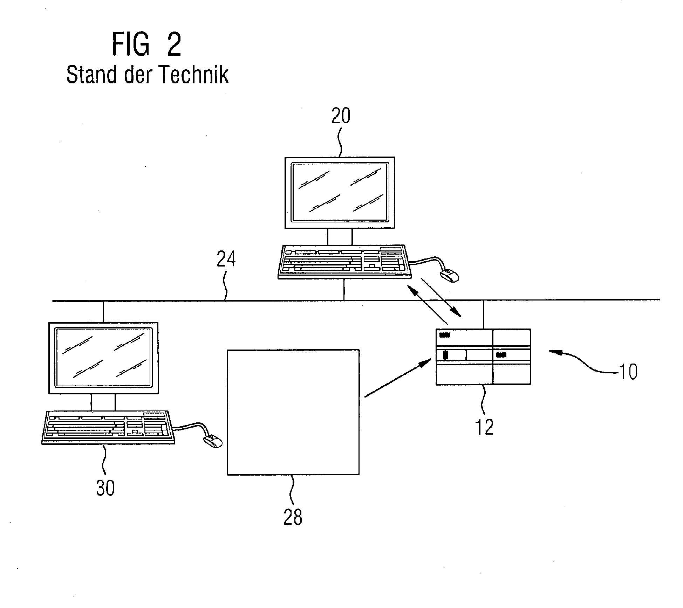

Die Darstellung in FIG 2 veranschaulicht die eingangs beschriebene, bekannte Lösung der Anmelderin für eine spezielle Form eines Zugriffs auf ein Automatisierungssystem 10. Das Automatisierungssystem 10 ist hier in Form eines einzelnen Automatisierungsgeräts 12 gezeigt. Auf dieses hat ein Client-Gerät 20 mittels zumindest eines Telekommunikationsnetzwerks 24 Zugriff. Im Rahmen dieses Zugriffs wird mittels eines in den Speicher des Clients 20 geladenen und als Webbrowser fungierenden Computerprogramms eine bei dem Automatisierungssystem 10, nämlich aus dem Speicher des Automatisierungsgeräts 12, abrufbare Webseite 28 angezeigt. Die Webseite 28 ist dafür zuvor mittels eines Programmiergeräts 30 oder dergleichen erstellt worden. In dessen Speicher ist zum Erstellen einer solchen Webseite 28 eine vollständige und zu dem jeweiligen Automatisierungsgerät 12 des Automatisierungssystems 10 passende Entwicklungsumgebung geladen.

Der hier vorgeschlagene Ansatz macht eine "externe" Entwicklungsumgebung, zum Beispiel eine mittels einer Engineering-Station 22 (FIG 1) vorgehaltene Entwicklungsumgebung oder eine in einen lokalen Speicher eines Programmiergeräts 30 oder dergleichen (FIG 2) geladene Entwicklungsumgebung entbehrlich.

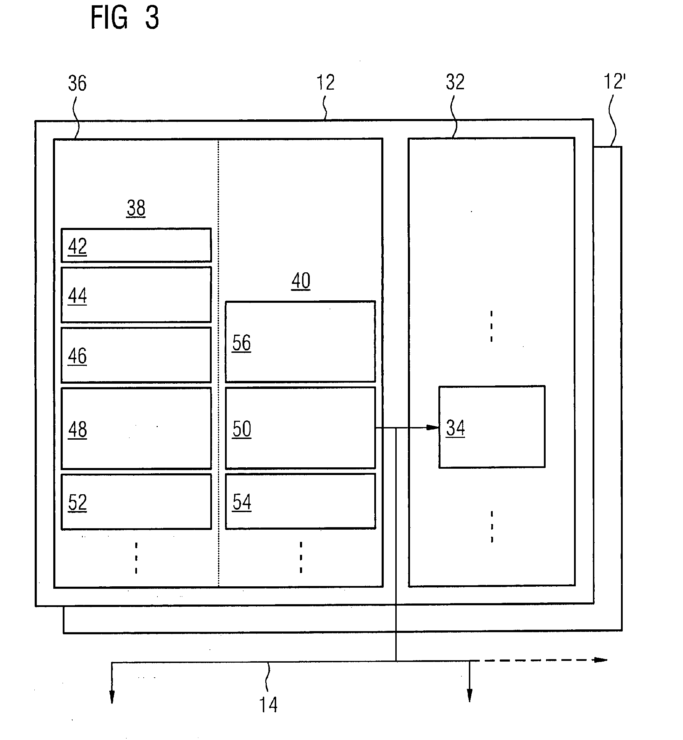

Die Darstellung in FIG 3 zeigt dafür in schematisch vereinfachter Form ein Automatisierungsgerät 12, nämlich einen Speicher eines Automatisierungsgeräts 12. Ein Zugriff auf das Automatisierungsgerät 12 wird - entsprechend der obigen Definition - als Zugriff auf ein Automatisierungssystem 10, zu dem das Automatisierungsgerät 12 gehört, verstanden.

Das Automatisierungsgerät 12 gemäß FIG 3 verfügt neben üblichen, an sich bekannten und hier nicht näher dargestellten Automatisierungsfunktionen 32, insbesondere einem Interpreter 34, zum Beispiel einem Interpreter für den MC7-Code der Automatisierungsgeräte 12 der Anmelderin, noch über Engineering-Fähigkeiten. Die Engineering-Fähigkeiten werden einem Client 20 (FIG 1) durch einen Webserver 36 bereitgestellt. Innerhalb des Webservers 36 wird zwischen Client-Services 38 und Server-Services 40 unterschieden. Client-Services 38 werden in den Browser des Clients 20 geladen und dort auch ausgeführt. Damit kann die Leistungsskalierung durch den Client 20 selbst erfolgen. Server-Services 40 verbleiben auf dem Webserver 36 und werden lokal durch das Automatisierungsgerät 12 ausgeführt.

Wenn das Automatisierungsgerät 12 wie gezeigt redundant ausgeführt ist (primäres Automatisierungsgerät 12, redundantes Automatisierungsgerät 12') sind auch die innerhalb des Automatisierungssystems 10 zur Verfügung stehenden Engineering-Fähigkeiten für den oder jeden Client 20 redundant verfügbar (hochverfügbar).

Bei der in FIG 3 gezeigten Ausführungsform bilden die Client-Services 38 und die Server-Services 40 des Webservers 36 zusammen das durch das Automatisierungssystem 10 selbst bereitgestellte Engineeringsystem, nämlich ein verteiltes Engineeringsystem in Form einzelner Computerprogramme, sie sind skalierbar und umfassen
- eine mit Webtechnologien, zum Beispiel HTML5 / JavaScript, realisierte graphische Oberfläche zur Projektierung der Hardware und/oder Software von Automatisierungsgeräten 12, 16 mittels eines Client 20 (Engineering-Benutzeroberfläche 42),
- eine mit Webtechnologien, zum Beispiel HTML5 / JavaScript, realisierte Engineering-Plattform 44, zum Beispiel eine Engineering-Plattform 44 in Form von oder nach Art einer Plattform, wie sie von der Anmelderin als sogenanntes TIA-Portal zur Verfügung gestellt wird, zur Projektierung der Software von Automatisierungsgeräten 12, 16 mittels eines Client 20,
- einen mit Webtechnologien, zum Beispiel HTML5 / JavaScript, realisierten Hardware-Konfigurator 46 zur Konfiguration des Automatisierungsnetzwerks, in dem die von dem Automatisierungssystem 10 umfassten Geräte 12, 16 zusammengefasst sind, sowie die Hardwarekomponenten des Automatisierungssystems 10,
- eine clientseitige Web-Anwendung 48 für den Download der Projektierung in das Automatisierungssystem 10,
- eine serverseitige Anwendung 50 für den Download der Projektierung aus dem jeweiligen Automatisierungsgerät 12 in das Automatisierungssystem 10 und alle weiteren, von dem Automatisierungssystem 10 umfassten Geräte 12, 16,
- client- und serverseitige Anwendungen 52, 54 zum Auslesen und Anzeigen von Diagnosedaten sowie
- eine serverseitige Anwendung 56 zum persistenten und gegebenenfalls redundanten Speichern von Projektdaten innerhalb des Automatisierungssystems 10.

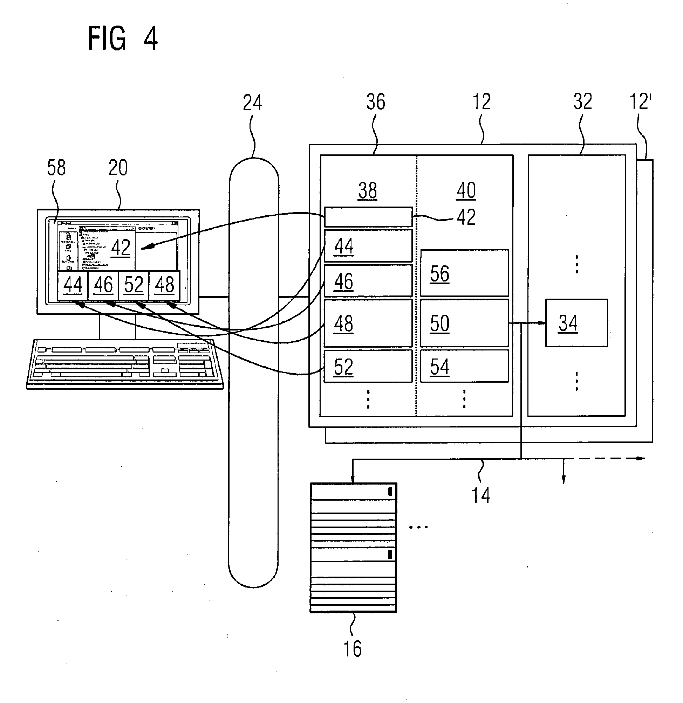

Die Darstellung in FIG 4 zeigt in schematisch vereinfachter Form den Vorgang der Anmeldung eines Clients 20 bei einem die Funktionalität einer Engineering-Station bereitstellenden Automatisierungsgerät 12 zum Zugriff auf das Automatisierungssystem 10 und zum Zwecke des Engineerings des Automatisierungssystems 10. Der Client 20 benötigt vor dem Zeitpunkt der Anmeldung bis auf einen Webclient 58, insbesondere ein als Webclient 58 fungierendes Computerprogramm in Form eines Webbrowsers, keine installierte Software. Damit handelt es sich um einen sogenannten "Zero-Installation-Client" 20. Bei der Anmeldung des Clients 20 beim Automatisierungssystem 10 wird im Webbrowser 58 des Clients 20 zunächst die IP-Adresse des Automatisierungsgeräts 12 eingegeben. Nach einer Herstellung der Verbindung zu dem Automatisierungsgerät 12 werden automatisch die Client-Services 42, 44, 46, 48, 52 in den Webbrowser 58 geladen. Von nun an besteht die Möglichkeit, mittels des Clients 20 die von dem Automatisierungssystem 10 selbst bereitgestellten Engineering-Funktionen zu nutzen und eine Projektierung und/oder Konfiguration des Automatisierungssystems 10 vorzunehmen, bis hin zu einer Programmierung einzelner Teilfunktionen der jeweiligen Automatisierungslösung und deren Übersetzung in einen jeweils von einem Prozessor der Zielhardware ausführbaren Code.

Die dem Automatisierungssystem 10 selbst bereitgestellten Client-Services werden zwar durch den Webserver 36 des jeweiligen Automatisierungsgeräts 12 bereitgestellt, jedoch auf dem Client 20 ausgeführt. Dadurch wird die auf dem jeweiligen Automatisierungsgerät 12 laufende Automatisierung nicht negativ beeinflusst, so dass der Zugriff auf das Automatisierungssystem 10 auch parallel zu einem bereits laufenden automatisierten Prozess erfolgen kann.

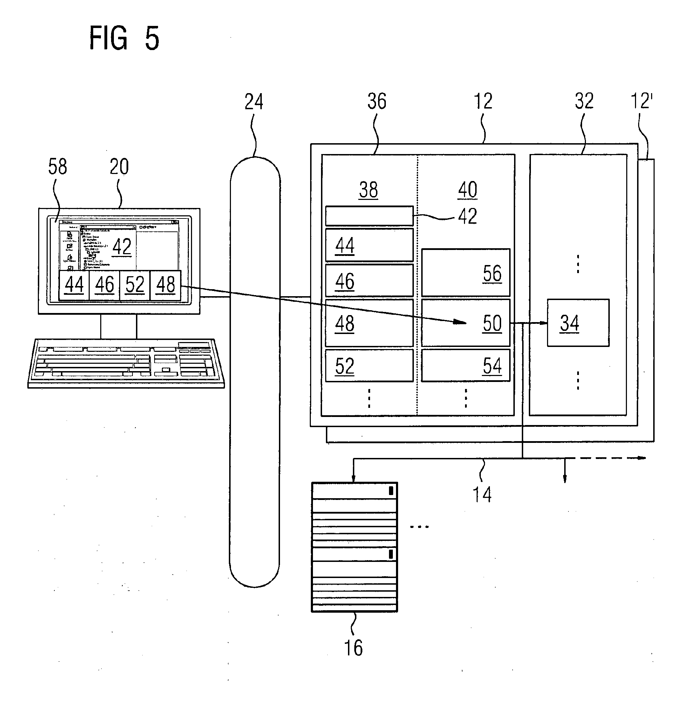

Die Darstellung in FIG 5 veranschaulicht den Download einer Projektierung für das Automatisierungssystem 10 nach einer Übersetzung auf dem Client 20 in das Automatisierungssystem 10 und auf einzelne oder alle davon umfassten Automatisierungsgeräte 12, 16. Damit der Client 20 keine spezifischen Kommunikationsprotokolle beherrschen muss, wird die übersetzte Projektierung durch die clientseitige Web-Anwendung 48 für den Download der Projektierung zur serverseitigen Anwendung 50 für den Download der Projektierung transferiert. Dadurch resultiert ein Zero-Installation-Client 20, denn auf diese Weise ist auf Seiten des Clients 20 keine Installation von Protokollstacks und dergleichen und auch keine Treiberkonfiguration oder Ähnliches notwendig. Die serverseitige Anwendung 50 für den Download der Projektierung kann die erhaltenen Daten auch an weitere von dem Automatisierungssystem 10 umfasste Geräte 16 senden.

Der Vorteil des hier vorgeschlagenen Ansatzes besteht vor allem darin, dass keine dedizierte Engineering-Station 22 oder keine dedizierten Engineering-Stationen 22 mehr benötigt werden, so dass die Kosten für deren Anschaffung, Wartung und Pflege entfallen. Die für die Automatisierung benötigten und passenden Engineering-Fähigkeiten werden von dem jeweiligen Automatisierungssystem 10 selbst bereitgestellt und müssen nicht separat installiert werden. Das Engineering, also die von dem Automatisierungssystem 10 bereitgestellten Engineering-Funktionen, ist bzw. sind in dem jeweiligen Automatisierungssystem 10 fest verankert und kann bzw. können bei einer redundanten Ausführung hochverfügbar zur Verfügung gestellt werden. Die Skalierung der Leistungsfähigkeit des Engineerings skaliert mit der Leistungsfähigkeit des Clients 20 oder der Clients 20. Ein Client 20 benötigt neben einem üblicherweise standardmäßig installierten Webbrowser keine weiteren Softwareinstallationen. Durch die Verwendung von Webtechnologien ist auch eine Projektierung eines Automatisierungssystems 10 über größere räumliche Distanzen, zum Beispiel über Ländergrenzen und Kontinentgrenzen hinweg, möglich. Schließlich wird die Konsistenz und Wartbarkeit der jeweiligen Projektierung verbessert, weil diese durch Verwendung der von dem Automatisierungssystem 10 selbst bereitgestellten Engineering-Funktionen stets im Automatisierungssystem 10 gespeichert ist.

Einzelne im Vordergrund stehende Aspekte der hier eingereichten Beschreibung lassen sich damit kurz wie folgt zusammenfassen: Angegeben werden ein Verfahren und ein zur Ausführung des Verfahrens bestimmtes Gerät 12, wobei sich das Verfahren dadurch auszeichnet, dass mittels eines einfachen Client-Geräts 20 ein Zugriff auf ein Automatisierungssystem 10 und ein davon umfasstes Gerät 12 sowie ein durch das Automatisierungssystem 10 selbst bereit gestelltes Engineeringsystem 42-54 möglich ist und auf diese Weise eine Projektierung des Automatisierungssystems 10 erfolgen kann, ohne wie bisher ein auf dem Client 20 installiertes Engineeringsystem 42-54 oder ein auf einer separaten Engineering-Station 22 installiertes Engineeringsystem 42-54 zu benötigen.

## Patentansprüche

1. Verfahren zum Zugriff auf ein zur Steuerung und/oder Überwachung eines technischen Prozesses bestimmtes Automatisierungssystem (10) mittels eines kommunikativ mit dem Automatisierungssystem (10) verbundenen, entfernten Geräts (20),
wobei in einen Speicher zumindest eines von dem Automatisierungssystem (10) umfassten Automatisierungsgeräts (12) ein als Webserver (36) fungierendes Computerprogramm geladen ist,
wobei in einen Speicher des entfernten Geräts (20) ein als Webclient (58) fungierendes Computerprogramm geladen ist und
wobei die kommunikative Verbindung zwischen dem entfernten Gerät (20) und dem Automatisierungsgerät (12) in Form einer kommunikativen Verbindung zwischen dem Webclient (58) und dem Webserver (36) besteht,
**dadurch gekennzeichnet,**
**dass** in den Speicher des Automatisierungsgeräts (12) zumindest ein zur Programmierung und/oder Konfiguration des Automatisierungssystems (10) bestimmtes und als Engineeringsystem (42-54) fungierendes Computerprogramm geladen ist,
**dass** der Webserver (36) als Schnittstelle zu dem Engineeringsystem (42-54) fungiert und einen Zugriff mittels des Webclients (58) auf das Engineeringsystem (42-54) erlaubt.

2. Automatisierungsgerät (12) zur Ausführung des Verfahrens nach Anspruch 1, wobei in einen Speicher des Automatisierungsgeräts (12) zumindest ein zur Programmierung und/oder Konfiguration eines Automatisierungssystems (10), zu dem das Automatisierungsgerät (12) gehört, bestimmtes und als Engineeringsystem (42-54) fungierendes Computerprogramm geladen ist und wobei der Webserver (36) als Schnittstelle zu dem Engineeringsystem (42-54) fungiert und einen Zugriff mittels des Webclients (58) auf das Engineeringsystem (42-54) erlaubt.

3. System mit einem Automatisierungssystem (10) und zumindest einem davon umfassten Automatisierungsgerät (12) nach Anspruch 2, sowie einem kommunikativ mit dem Automatisierungssystem (10) und dem zumindest einen Automatisierungsgerät (12) verbundenen entfernten Gerät (20), wobei in einen Speicher des entfernten Geräts (20) ein als Webclient (58) fungierendes Computerprogramm geladen ist, wobei die kommunikative Verbindung zwischen dem entfernten Gerät (20) und dem zumindest einen Automatisierungsgerät (12) in Form einer kommunikativen Verbindung zwischen dem Webclient (58) und dem Webserver (36) besteht und wobei mittels des Webclients (58) auf das Engineeringsystem (42-54) zugegriffen werden kann.
